(19) Europäisches Patentamt
European Patent Office
Office européen des brevets

(11) EP 2 657 657 A1

(12) EUROPEAN PATENT APPLICATION
published in accordance with Art. 153(4) EPC

(43) Date of publication:
30.10.2013 Bulletin 2013/44

(51) Int Cl.:
G01F 1/66 (2006.01)    G01F 1/00 (2006.01)

(21) Application number: 11851449.6

(86) International application number:
PCT/JP2011/006972

(22) Date of filing: 14.12.2011

(87) International publication number:
WO 2012/086156 (28.06.2012 Gazette 2012/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 22.12.2010  JP 2010285592

(71) Applicant: Panasonic Corporation
Osaka 571-8501 (JP)

(72) Inventors:
• MIYATA, Hajime
  Osaka 540-6207 (JP)

• NAKANO, Makoto
  Osaka 540-6207 (JP)
• FUJII, Yuji
  Osaka 540-6207 (JP)
• OZAKI, Yukinori
  Osaka 540-6207 (JP)

(74) Representative: Schwabe - Sandmair - Marx
Patentanwälte
Stuntzstraße 16
81677 München (DE)

(54) ULTRASONIC FLOWMETER

(57)    Provided is an ultrasonic flow meter capable of detecting a flow rate using measurement flow channel (1) including layered flow channels and a pair of ultrasonic sensors (7) and (8) disposed on a wall surface on the same side of measurement flow channel (1) so as to form a propagation path of ultrasonic waves utilizing reflection on flow channel inner wall surface (1c) on an opposing side, and control rod (9) as fluid control means is disposed on an upstream side of separation plates that form a multilayer section.

FIG. 2

**Description**

TECHNICAL FIELD

The present invention relates to an ultrasonic flow meter capable of measuring a flow rate of gas and the like.

BACKGROUND ART

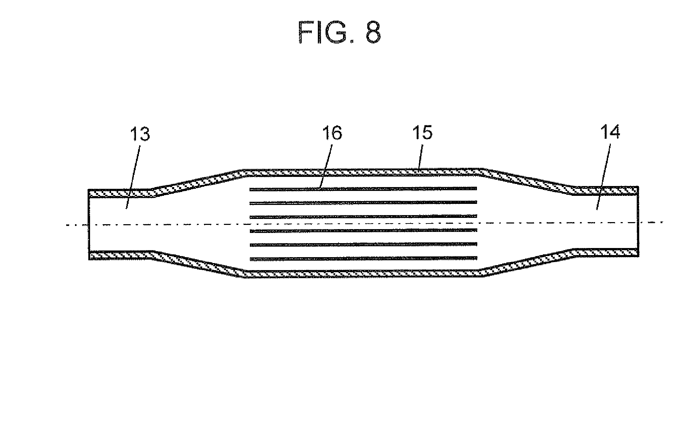

As illustrated in FIG. 8, a conventional ultrasonic flow meter of this type is provided with flow speed sensing means including a pair of ultrasonic transducers (not depicted) that are disposed in measurement flow channel 15 oppositely and respectively on an upstream side and a downstream side, the measurement flow channel being connected to fluid supply channel 13 on the upstream side and to fluid outflow channel 14 on the downstream side.

Further, an interior of measurement flow channel 15 is divided by a plurality of planar separation plates 16 so that a fluid forms a laminar flow.

Then, the flow speed sensing means measures a flow speed of the fluid flowing through measurement flow channel 15 based on a propagation time of ultrasonic waves between the ultrasonic transducers, and calculates a flow rate based on the measured flow speed (see PTL 1, for example) .

However, with such a conventional configuration, due to an influence of a contraction flow produced when a target fluid flows into measurement flow channel 15 at an inlet port of measurement flow channel 15, and due to an influence of a flow speed distribution of the target fluid by a friction with an inner wall surface of measurement flow channel 15 before separation plates 16 make the channel laminar, the measured flow rates and the flow speed distributions are different between an outer layer and an inner layer. Moreover, as it is difficult for an ultrasonic sensor to let ultrasonic waves propagate uniformly for an entire height of the flow channel, and as intensities of transmission and reception of the ultrasonic sensor are not uniform, in propagation of ultrasonic waves in each of the layers, an intensity of the ultrasonic waves emission is 5distributed according to the ultrasonic sensor in the corresponding layer. In addition, if the flow speed varies from layer to layer, a propagation time of ultrasonic waves also varies from layer to layer. This makes an error cause of the measured flow rate throughout the measurement flow channel, and produces an adverse effect on reliability of measurement of the flow speed in the flow channel as a whole.

Furthermore, when producing a flow meter, it is necessary to make a correction so that a flow rate can be measured correctly by measuring an actual flow rate and correcting a difference between the measured value and a true value by correcting an instrumental error so that a true flow rate value and a measured flow rate value fall within a predetermined error range in a range of flow rate measurement. At this time, it is desirable that a flow rate coefficient (= true value / measured value) be flat within the range of flow rate measurement. Specifically, if the flow rate coefficient is flat, it is possible to complete the correction of an instrumental error by making one- point correction at any flow rate when the flow rate coefficient is flat even if the flow rate changes. It should be understood that it is not necessary to correct an instrumental error if the flow rate coefficient is 1 and flat.

However, as described above, when a flow speed ratio varies from layer to layer due to the measured flow rates, there is an adverse effect produced on the flatness of the flow rate coefficient.

In particular, in a case of a V-shaped propagation path utilizing reflection of ultrasonic waves on the wall, ultrasonic waves propagate through the flow channel for a distance twice as long as that in a case where reflection is not utilized. While this provides an advantage that time resolution in the measurement is improved, it also gives  a larger influence of a difference in flow rates between layers.

Conventionally, a straightening member is provided for the inlet port of the measurement flow channel to make the flow uniform in order to make this influence smaller. However, providing a straightening member poses problems such as an increasingly complicated structure and increased costs.

The present invention is made in order to solve the conventional problems and an object of the present invention is to provide an ultrasonic flow meter having a flat flow rate coefficient.

Citation List

Patent Literature

PTL 1: Unexamined Japanese Patent Publication No. H09-43015

## SUMMARY OF THE INVENTION

In order to solve the conventional problems, an ultrasonic flow meter according to the present invention is provided with: a multilayer flow channel including a plurality of layered flow channels separated by a planar separation plate, and allowing a target fluid to flow therethrough; a pair of ultrasonic sensors disposed on upstream and downstream of the multilayer flow channel; and flow rate detecting means operable to detect a flow rate of the target fluid based on a propagation time of ultrasonic waves between the ultrasonic sensors, wherein rod-shaped fluid control means is disposed near an upstream side of the separation plate.

With this, it is possible to ensure flatness of a flow rate coefficient as an important performance indicator of a flow meter.

## BRIEF DESCRIPTION OF DRAWINGS

FIG. 1 is a structural diagram of an ultrasonic flow meter according to a first exemplary embodiment of the present invention.

FIG. 2 is a front structural diagram illustrating a measurement flow channel of the ultrasonic flow meter according to the first exemplary embodiment of the present invention.

FIG. 3A is a cross-sectional view taken along line 3A-3A in FIG. 2.

FIG. 3B is a cross-sectional view taken along line 3B-3B in FIG. 2.

FIG. 4 is a diagram for illustration of an operation of the ultrasonic flow meter according to the first exemplary embodiment of the present invention.

FIG. 5 is a chart showing a relation between a flow rate and a flow rate coefficient depending on the presence of a control rod in the ultrasonic flow meter according to the first exemplary embodiment of the present invention.

FIG. 6 is a conceptual diagram illustrating a position for attaching the control rod in the ultrasonic flow meter according to the first exemplary embodiment of the present invention.

FIG. 7A is a conceptual diagram of a flow in the ultrasonic flow meter according to the first exemplary embodiment of the present invention, where fluid control means is not provided.

FIG. 7B is a conceptual diagram of a flow in the ultrasonic flow meter according to the first exemplary embodiment of the present invention, where fluid control means is provided.

FIG. 8 is a structural diagram of a conventional ultrasonic flow meter.

## DESCRIPTION OF EMBODIMENT

An ultrasonic flow meter according to a first exemplary embodiment is described below with reference to the drawings. It is to be noted that the present invention is not limited to the present embodiment.

## FIRST EXEMPLARY EMBODIMENT

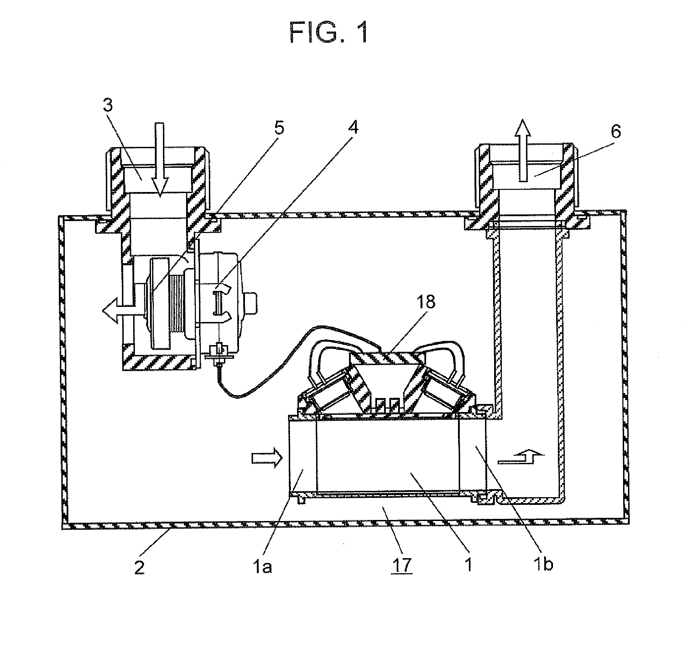

As illustrated in FIG. 1, in the middle of fluid supply channel 3, there is provided shutoff valve 5 that is opened and closed by a valve element in connection with drive unit 4 configured by an electromagnetic device such as a stepping motor. An outline arrow indicates a direction in which a target fluid flows, and the target fluid flows from fluid supply channel 3 into meter casing 2 when the valve is opened. Measurement flow channel 1 is a rectangle having an oblong cross-section. The target fluid filled within meter casing 2 flows into measurement flow channel 1 from upstream side 1a which is an inlet side of measurement flow channel 1, and flows out from meter casing 2 through fluid outflow channel 6 connected to downstream side 1b of measurement flow channel 1.

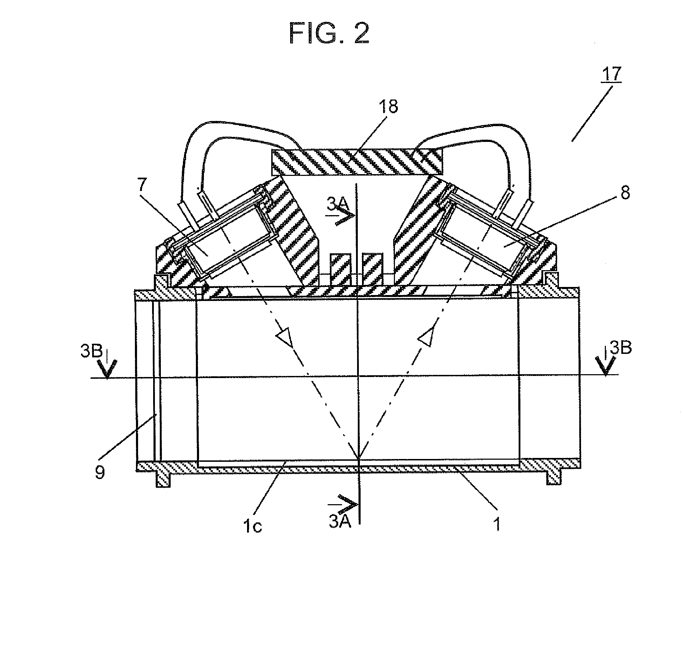

Shutoff valve 5 is configured to be closed if something is wrong with the fluid flow or in the event of an earthquake. FIG. 2 shows a cross-section of flow measurement unit 17 illustrated in FIG. 1. On one surface of measurement flow channel 1, a pair of ultrasonic sensors 7 and 8 that constitute flow speed sensing means are disposed. Further, ultrasonic sensors 7 and 8 are disposed in an inclined manner on the one surface of measurement flow channel 1 such that ultrasonic waves oscillated from one of the ultrasonic sensors are reflected on a flow channel inner wall surface on an opposing side and received by the other of the ultrasonic sensors. Moreover, flow rate detecting means 18 connected with ultrasonic sensors 7 and 8 via a signal line are disposed and configured as a measurement unit for measuring a flow rate. Flow rate detecting means 18 measure a propagation time of ultrasonic waves between the pair of ultrasonic sensors 7 and 8, and obtains a flow speed and a flow rate of the target fluid.

In the ultrasonic flow meter illustrated in FIG. 1 according to a first exemplary embodiment of the present invention, meter casing 2 constitutes a chamber since the target fluid once filled within meter casing 2 and then flows into measurement flow channel 1. Accordingly, as compared to a system in which a target fluid that flows through an inflow port is connected directly to a measurement flow channel via flexed pipework, a drift does not easily occur in the flow flowing into the measurement flow channel and reliability in measurement of the flow speed and the flow rate is improved.

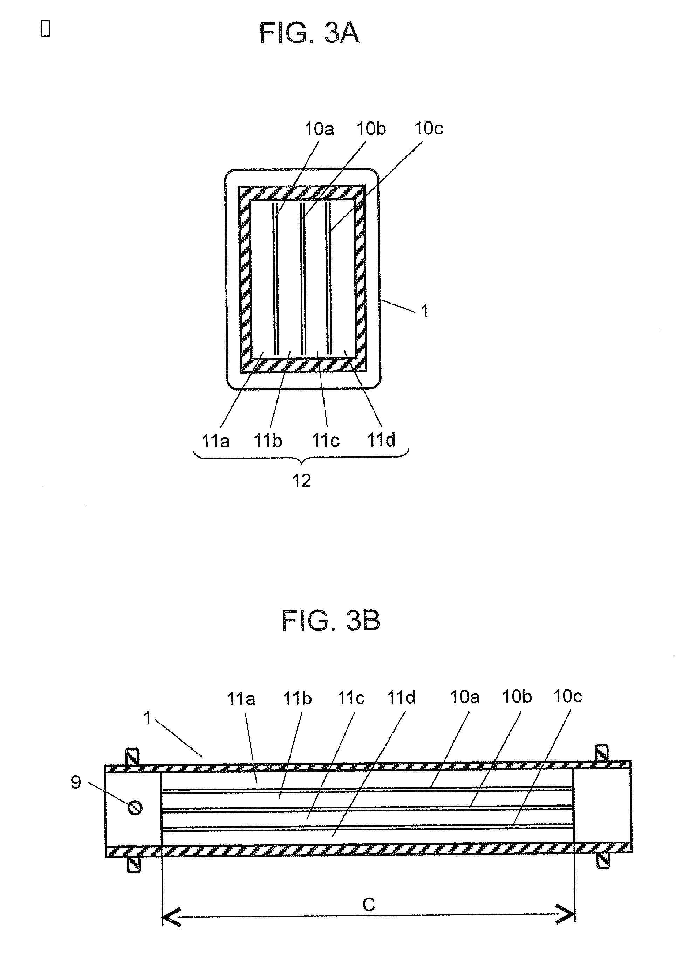

As described above, measurement flow channel 1 of the ultrasonic flow meter according to this embodiment has a rectangular cross-section, and its short side is divided in substantially equal heights using planar separation plates 10a, 10b, and 10c as illustrated in FIG. 3A to form layered flow channels 11a, 11b, 11c, and 11d. In this manner, the plurality of layered flow channels 11a, 11b, 11c, and 11d constitute multilayer flow channel 12 (indicated by C in FIG. 3B).

Specifically, the flow of the target fluid forms a laminar flow by separating measurement flow channel 1 using separation plates 10a, 10b, and 10c into narrow spaces, and the flow in a height direction of the flow channel is distributed into layered flow channels 11a, 11b, 11c, and 11d. With such a configuration, as compared to the conventional single layer flow channel, the distribution of the flow speed can be uniformized and stabilization of measurement by ultrasonic waves is ensured.

Further, on the upstream side of separation plate 10b, control rod 9 as fluid control means is disposed with a predetermined distance from separation plate 10b. Control rod 9 is disposed so as to be perpendicular to a direction in which the target fluid flows, and parallel to separation plate 10b.

While four layered flow channels are formed using three separation plates in this embodiment, the same effect can be achieved with a configuration other than a four-layer configuration, as long as at least three layers are provided.

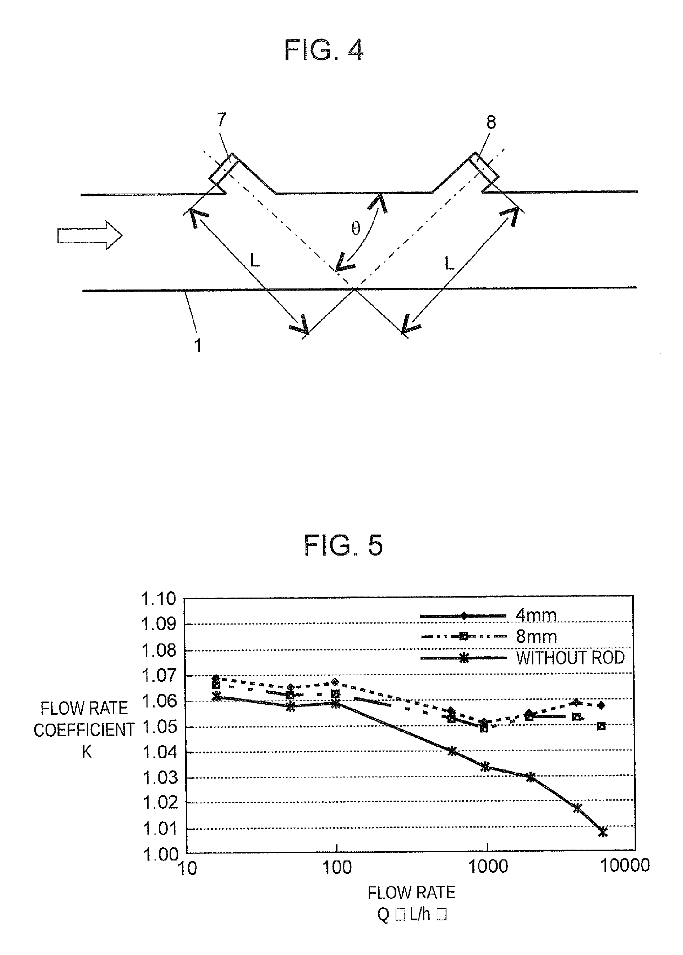

Next, an operation of flow measurement using ultrasonic waves will be described with reference to FIG. 4. As illustrated in FIG. 1, FIG. 2, FIG. 3A, and FIG. 3B, in the ultrasonic flow meter according to this embodiment, ultrasonic sensors 7 and 8 are disposed on the same plane in the rectangular cross-section of measurement flow channel 1 in order to unitize the pair of ultrasonic sensors 7 and 8. Accordingly, a path for transmission and reception of ultrasonic waves between ultrasonic sensors 7 and 8 forms a V shape (V-path propagation channel) reflecting on flow channel inner wall surface 1c on the opposing side (FIG. 2), and ultrasonic waves between ultrasonic sensors 7 and 8 are transmitted and received by this propagation route.

In this configuration, a propagation time T1 after ultrasonic waves are transmitted from ultrasonic sensor 7 on the upstream side until received by ultrasonic sensor 8 on the downstream side is measured. In addition, a propagation time T2 after ultrasonic waves are transmitted from ultrasonic sensor 8 on the downstream side until received by ultrasonic sensor 7 on the upstream side is measured.

Based on a propagation time T1 and a propagation time T2 that have been measured in this manner, the flow rate is calculated by calculation means based on expressions listed below.

As illustrated in FIG. 4, where an angle between flow speed V of the target fluid in the flow direction in the measurement flow channel and the ultrasonic propagation path is $\theta$, a distance between the ultrasonic sensors is $2 \times L$, and a sound velocity of the target fluid is C, flow speed V is calculated based on the following expressions.

$$T1 = 2 \times L / (C + V\cos\theta) \qquad (1)$$

$$T2 = 2 \times L / (C - V\cos\theta) \qquad (2)$$

Sound velocity C is deleted from an expression of subtracting an inverse of T2 from an inverse of T1.

$$V = (2 \times L / 2\cos\theta)((1 / T1) - (1 / T2)) \qquad (3)$$

Here, flow speed V can be calculated based on values of T1 and T2 since $\theta$ and L are known. Now, provided that a flow rate of air is measured, and angle $\theta$ = 45 degrees, distance L = 35 mm, sound velocity C = 340 m/s, and flow speed V = 8 m/s are assumed, it is possible to measure instantaneously obtaining results of T1 = $2.0 \times 10^{-4}$ seconds and T2 = $2.1 \times 10^{-4}$ seconds.

Then, flow rate Q of the target fluid that flows through measurement flow channel 1 is obtained by an expression listed below, where a cross-section of the flow channel is S and a flow channel coefficient is K.

$$Q = K \times V \times S \qquad\qquad (4)$$

It should be noted that it is possible to measure a flow speed with a propagation path for ultrasonic waves other than the above-described V-path propagation path, as long as the path that crosses the flow channel at least once and in which the propagation time of ultrasonic waves varies depending on the flow speed can be formed, and to provide advantages for the configuration of the present invention.

FIG. 5 shows experimental data of the flow rate coefficient in actual measurement by the ultrasonic flow meter according to this embodiment. In FIG. 5, a horizontal axis indicates flow rate Q of the target fluid that flows through measurement flow channel 1 and a vertical axis indicates flow rate coefficient K.

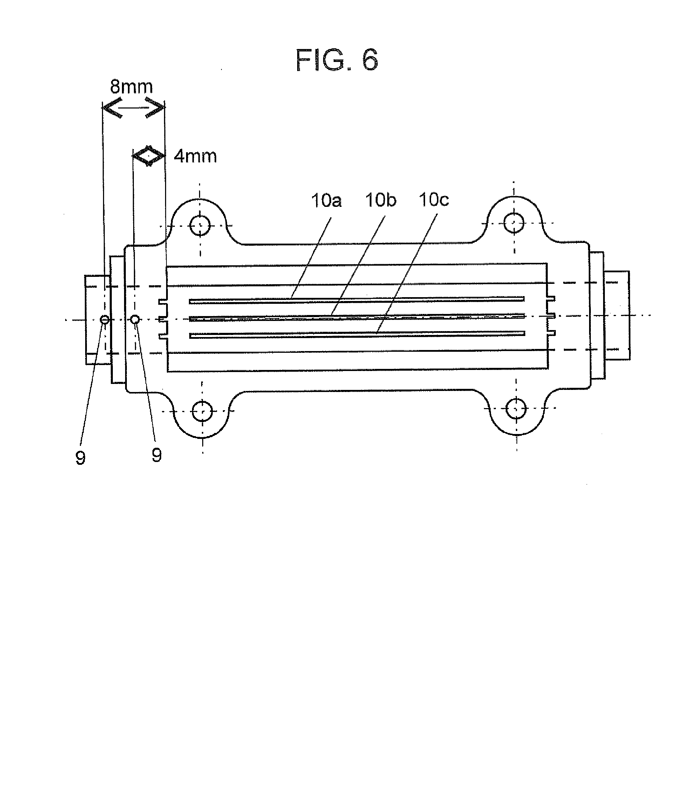

FIG. 5 shows measurement values of a case in which control rod 9 as the fluid control means is not provided, and cases in which control rod 9 as the fluid control means is provided in a positional relation illustrated in FIG. 6, respectively at 4 mm interval and at 8 mm interval.

As illustrated in FIG. 5, when control rod 9 is not provided, the flow rate coefficient decreases and is represented by a downward-sloping chart as the flow rate increases.

One cause of this is that as the flow speed becomes faster, an influence of a contraction flow at an inlet port of the measurement flow channel becomes larger and a ratio between a flow rate through an outer layer that is closer to the wall and a flow rate through an inner layer decreases as compared to a case in which the flow rate is smaller. Specifically, when the flow rate is large, more fluid flows through the inner layer and the flow speed increases. In addition, since the center of the ultrasonic sensors has a stronger intensity distribution of ultrasonic waves as described above, it is possible to measure a flow speed faster than an average flow speed of the flow channel as a whole. As a result, when the flow rate increases as described above, the flow rate coefficient decreases, and the flow rate coefficient becomes less flat.

In order to increase the flow rate coefficient on a side of the large flow rate, it is necessary to decrease a value of a flow speed measured by a current meter. Specifically, it is necessary to control variation in the flow due to the influence of the contraction flow described above. Thus, the present invention achieves this purpose by a simple configuration of providing control rod 9 as the fluid control means in front of the separation plates.

Here, as illustrated in FIG. 5, if a distance from the separation plates to control rod 9 exceeds 8 mm, it is difficult to maintain the flatness of the flow rate coefficient. Further, in order to achieve the effect of control rod 9, it is necessary to keep a distance between separation plate 10b to control rod 9 equal to or greater than 2 mm.

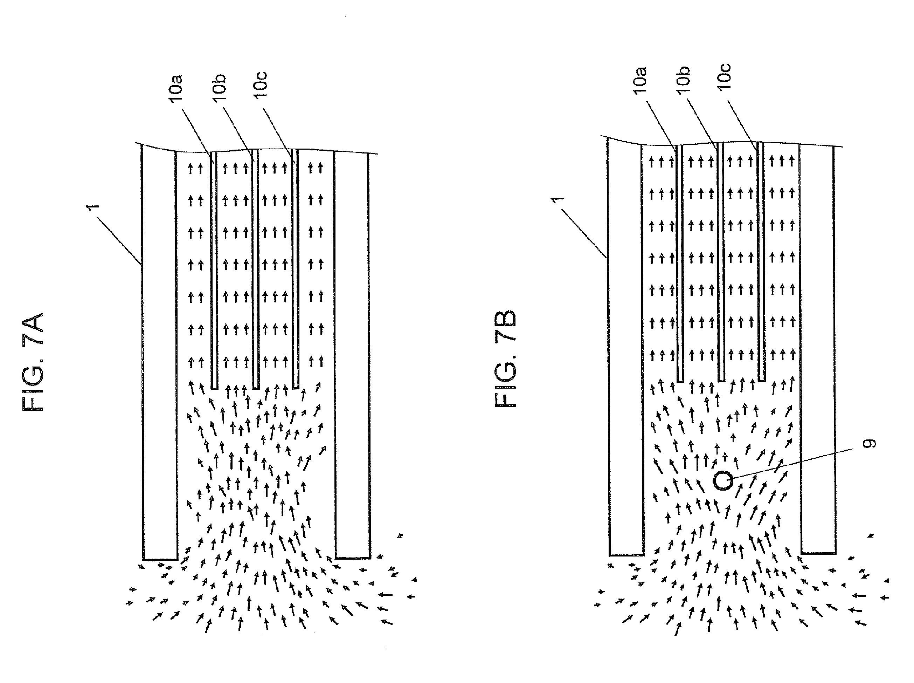

Actions and effects of the present invention will now be described with reference to FIG. 7A and FIG. 7B.

When the measured flow rate is small, the flow within measurement flow channel 1 forms a laminar flow in the multilayer flow channel separated by separation plates 10a, 10b, and 10c, and flows substantially equally through each layer of the multilayer flow channel regardless of the presence of control rod 9. As the flow speed increases and as the contraction flow produced at the inlet port of the measurement flow channel intensifies, the flow concentrates to the interior if control rod 9 is not provided as illustrated in FIG. 7A.

If control rod 9 is provided, as illustrated in FIG. 7B, the fluid cannot flow along control rod 9 to produce detachment and the like, and a backward flow is hindered. Then, the concentration toward the center due to the contraction flow is distributed and the flow flows equally in each layer of the multilayer. As a result, regardless of the flow rate ranging from a small flow rate to a large flow rate, it is possible to realize an equal flow in each layer of the multilayer, and therefore flatness of the flow rate coefficient can be ensured.

Here, in the case of the ultrasonic flow meter according to this embodiment, optimal positions of control rod 9 as the fluid control means is equal to or greater than 2 mm from separation plate 10b, and it is possible to provide the effect of the contraction flow appropriately by setting the cross-section of control rod 9 to be circular so that the fluid may flow along their wall surfaces and the diameter of control rod 9 to be equal to or smaller than 1/2 of the height of the layered flow channel (in FIG. 3B, a distance between layered flow channels 11a and 11b, for example).

It is envisaged that the above specification is changed depending on the configuration of the flow channel, and the above specification may not restrict the present invention.

The present invention is provided with: a multilayer flow channel including a plurality of layered flow channels separated by planar separation plates, and allowing a target fluid to flow therethrough; a pair of ultrasonic sensors disposed on upstream and downstream of the multilayer flow channel; and flow rate detecting means operable to detect a flow rate of the target fluid based on a propagation time of ultrasonic waves between the ultrasonic sensors, wherein rod-shaped fluid control means is disposed near an upstream side of the separation plates. With this configuration, it is possible to prevent a difference between flow speeds of an outer layer and an inner layer of the multilayer flow channel from occurring, and to reduce a measuring error in measurement, and thus flatness of the flow rate coefficient can be ensured.

Further, in the present invention, the fluid control means is disposed at a substantially central position in a height of the multilayer flow channel in a direction of layers (a vertical direction in FIG. 3B), in an orientation perpendicular to a flow of the target fluid and parallelly to the separation plates.

Moreover, in the present invention, the fluid control means is disposed at the upstream side in a distance ranging from 2 mm to 8 mm from the separation plate on the upstream side. With this configuration, it is possible to improve the effect of preventing the difference between the flow speeds of the outer layer and the inner layer of the multilayer flow channel from being produced, and to reduce the measuring error in measurement, and thus flatness of the flow rate coefficient can be further ensured.

Furthermore, in the present invention, a cross- section of the fluid control means is circular, and a diameter of the cross- section is equal to or smaller than 1/2 of the height of one of the layered flow channels. With this configuration, it is possible to prevent the difference between the flow speeds of the outer layer and the inner layer of the multilayer flow channel from occurring in an optimal state by the circular shape without unnecessarily disturbing the flow in the measurement flow channel, and to reduce the measuring error in measurement, so that flatness of the flow rate coefficient can be ensured.

Further, in the present invention, the pair of ultrasonic sensors are disposed on one side surface of the layered flow channel, and ultrasonic waves oscillated from one of the ultrasonic sensors is reflected on a flow channel inner wall surface on an opposing side and then received by the other of the ultrasonic sensors. With this configuration, it is possible to increase a propagation path of ultrasonic waves even when the flow channel is downsized, to improve time resolution in measurement, and to improve measurement accuracy.

INDUSTRIAL APPLICABILITY

The ultrasonic flow meter according to the present invention is capable of measuring a flow speed accurately by reducing a ratio between flow speeds of an outer layer and inner layer even when a measured flow rate changes, and of reducing its size and costs, and thus can be used as a flow meter in various applications such as a gas meter.

REFERENCE MARKS IN THE DRAWINGS

| 1 | measurement flow channel |
|---|---|
| 1a | upstream side |
| 1b | downstream side |
| 1c | flow channel inner wall surface on opposing side |
| 2 | meter casing |
| 7, 8 | ultrasonic sensor |
| 9 | control rod (fluid control means) |
| 10a, 10b, 10c | separation plate |
| 11a, 11b, 11c, 11d | layered flow channel |
| 12 | multilayer flow channel |
| 17 | flow measurement unit |
| 18 | flow rate detecting means |

**Claims**

1. An ultrasonic flow meter comprising:

a multilayer flow channel including a plurality of layered flow channels separated by a planar separation plate, and allowing a target fluid to flow therethrough;

a pair of ultrasonic sensors disposed individually at upstream and downstream of the multilayer flow channel; and

flow rate detecting means operable to detect a flow rate of the target fluid based on a propagation time of ultrasonic waves between the ultrasonic sensors, wherein

rod-shaped fluid control means is disposed near an upstream side of the separation plate.

2. The ultrasonic flow meter according to claim 1, wherein

the fluid control means is disposed at a substantially central position in a height of the multilayer flow channel in a direction of layers, in an orientation perpendicular to a flow of the target fluid and parallel to the separation plate.

3. The ultrasonic flow meter according to claim 1 or 2, wherein

the fluid control means is disposed at the upstream side in a distance ranging from 2 mm to 8 mm from the separation plate.

4. The ultrasonic flow meter according to one of claims 1 to 3, wherein

a cross-section of the fluid control means is circular, and a diameter of the cross-section is equal to or smaller than 1/2 of the height of one of the layered flow channels.

5. The ultrasonic flow meter according to one of claims 1 to 4, wherein

the pair of ultrasonic sensors are disposed on a same side surface of the layered flow channel, and the ultrasonic waves transmitted from one of the ultrasonic sensors is reflected on a flow channel inner wall surface on an opposing side and then received by the other of the ultrasonic sensors.

# FIG. 1

# FIG. 2

# FIG. 3A

# FIG. 3B

# FIG. 4

# FIG. 5

# FIG. 6

## FIG. 7A

1

10a

10b

10c

## FIG. 7B

1

10a

10b

10c

9

## FIG. 8

<table>
<tr><td colspan="2" align="center">**INTERNATIONAL SEARCH REPORT**</td><td>International application No.</td></tr>
<tr><td colspan="2"></td><td>PCT/JP2011/006972</td></tr>
</table>

A. CLASSIFICATION OF SUBJECT MATTER
*G01F1/66*(2006.01)i, *G01F1/00*(2006.01)i

According to International Patent Classification (IPC) or to both national classification and IPC

B. FIELDS SEARCHED

Minimum documentation searched (classification system followed by classification symbols)
G01F1/66, G01F1/00

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-138628 A (Matsushita Electric Industrial Co., Ltd.), 13 May 2004 (13.05.2004), paragraphs [0069] to [0079], [0133] to [0137]; fig. 12, 13, 26<br>& US 6216544 B1      & EP 913670 A1<br>& WO 1998/048247 A1    & KR 10-2000-0016771 A<br>& CN 1229469 A | 1,3-5<br>2 |
| A | JP 2010-266345 A (Panasonic Corp.), 25 November 2010 (25.11.2010), entire text; all drawings (Family: none) | 1-5 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 January, 2012 (05.01.12) | Date of mailing of the international search report<br>17 January, 2012 (17.01.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/006972 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2010-71943 A (Yazaki Corp.), 02 April 2010 (02.04.2010), entire text; all drawings (Family: none) | 1-5 |
| A | JP 2005-257363 A (Matsushita Electric Industrial Co., Ltd.), 22 September 2005 (22.09.2005), entire text; all drawings (Family: none) | 1-5 |
| A | EP 1876427 A1 (LANDIS+GYR GMBH), 09 January 2008 (09.01.2008), entire text; all drawings & DE 102006030942 A | 1-5 |
| A | DE 19652655 A1 (HYDROMETER GMBH), 02 July 1998 (02.07.1998), entire text; all drawings (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0943015 B